# FASCICULE DE BREVET EUROPEEN

(11) **EP 1 162 799 B1**
(45) Date de publication et mention de la délivrance du brevet: **03.09.2003**
(21) Numéro de dépôt: 01401417.9
(22) Date de dépôt: 31.05.2001
(51) Int. Cl.: H04L 12/56

(54) **Procédé de gestion d'un réseau de télécommunications et unité de gestion de réseau pour la mise en oevre du procédé**
Verwaltungsverfahren vor einem telekommunikationsnetzwerk und vorrichtung zur durchführung des Verfahrens
Control method for a telecommunications network and control unit for implementing the method

(30) Priorité: 05.06.2000 FR 0007141
(43) Date de publication de la demande: 12.12.2001
(73) Titulaire: ALCATEL, 75008 Paris (FR)
(72) Inventeur: Gaudillat, Hervé, Petaluma CA 94954 (US)
(74) Mandataire: Fournier, Michel Robert Marie

(56) Documents cités:
- EP-A- 0 781 068
- EP-A- 1 001 574

## Description

L'invention concerne un procédé de gestion d'un réseau de télécommunications. Elle concerne également une unité de gestion de réseau mettant en oeuvre le procédé. L'invention s'applique à la gestion de la disponibilité et de l'utilisation des ressources physiques.

La gestion d'un réseau de télécommunications correspond à un système d'information apte à fournir une connaissance des ressources physiques à savoir les ressources des éléments du réseau NE (NE provenant de l'anglais *Network Element*) également dénommé noeud, leur points de terminaison et les propriétés de leurs points de terminaison (plus particulièrement les capacités en bande passante ; la capacité en nombre maximum de chemins de connexion et la capacité en identifiant de chemins de connexion pouvant être alloués).

Les points de terminaison sont dénommés points d'accès pour un réseau ATM (*Asynchronous Transfer Mode*).

On rappelle que les points de terminaison d'un élément de réseau possèdent des caractéristiques techniques ayant des propriétés dédiées à l'aspect connectivité. C'est à ces propriétés que l'on s'intéresse dans la suite. Parmi ces propriétés, on peut citer les capacités en bande passante (bande passante en entrée, bande passante en sortie) ; on peut citer également la capacité en nombre maximum de chemins de connexion et la capacité en identifiant de chemins de connexion pouvant être alloués.

Ce système d'information repose sur un logiciel à trois niveaux.

Un premier niveau est dénommé couche EML (*Equipment Management Layer*). il s'agit principalement de la couche application chargée de l'interface avec l'élément de réseau NE cette couche permet de connaître l'état de l'élément de réseau et d'envoyer des commandes de gestion sur cet élément.

Un deuxième niveau est dénommé couche NML (Network Management Layer). Il s'agit de la couche qui permet de piloter les chemins de connexion permettant des communications dans un réseau.

Un troisième niveau est dénommé couche SML (Services Management Layer). Il s'agit de la couche de dédiée à la gestion des services. Elle permet par exemple d'assurer la gestion des réseaux privés construits à partir du réseau d'un opérateur de télécommunications.

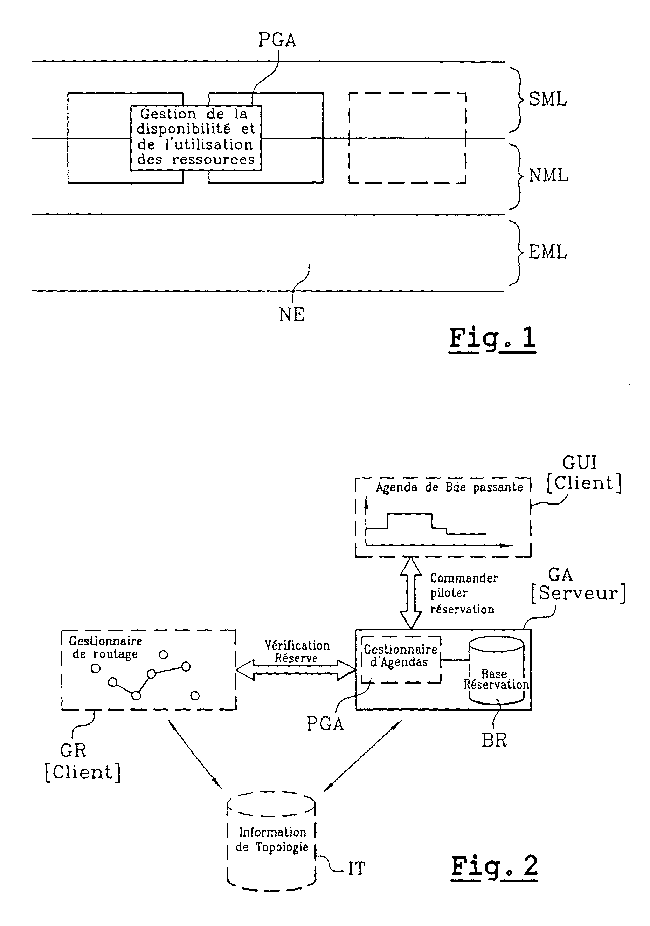

L'invention se situe à l'interface des deux couches NML et SML comme l'illustre de façon schématique la figure 1.

Elle permet de donner à tout utilisateur une visibilité en temps réel sur les ressources disponibles et utilisées à brève ou à longue échéance.

Elle permet en particulier de réserver de façon périodique ou apériodique tout ou partie des capacités offertes par une ressource physique de télécommunications (par exemple la capacité offerte en bande passante pour chaque point de terminaison d'un noeud et/ou la capacité offerte en nombre maximum de chemin de connexion et la capacité en identifiant pour chaque point de terminaison de ce noeud).

A ce jour les systèmes de gestion de réseau gèrent les chemins/connexions entre les éléments de réseau, mais la plupart d'entre eux fonctionnent sur le principe de la création/réservation et suppression en temps réel. Un example d'un systeme d'allocation de bande passante est décrit dans EP 0 781 068.

L'état de la technique existant à ce jour ne convient plus du fait de la croissance des demandes en capacités du réseau et plus particulièrement les capacités en bande passante et le nombre de points de connexion.

De plus, du fait du développement de nouveaux services tel que la gestion des réseaux privés virtuels VPN (*Virtual Private Network*), des besoins pour assister les opérateurs s'accroissent notamment dans la fourniture de services de gestion de la qualité de service des réseaux.

En outre du fait de l'évolution du « *traffic engineering* », les algorithmes de routage basés sur la notion de contraintes (*constraint base routing*) ont besoin de s'appuyer sur des services de gestion de disponibilité et d'utilisation des ressources afin d'optimiser le routage (*nota* bene : du point de vue du routage la bande passante est vue comme une contrainte plutôt que comme une propriété de ressource).

L'invention permet de remédier à ce problème.

À cette fin l'invention à pour objet un procédé de gestion d'un réseau de télécommunications comprenant :
- la réception de demandes de connexion, lesdites connexions étant déterminées à partir de paramètres contenus dans ces demandes de connexion,
- la vérification de la possibilité de connexion, selon lesdits paramètres, à partir d'une base de données dans laquelle toutes les connexions sont mémorisées,
- la mise à jour de ladite base de données lorsque la connexion est possible,
principalement caractérisé en ce que lesdits paramètres comprennent des paramètres de temps.

Selon une caractéristique du procédé, les paramètres de temps correspondent à des suites d'intervalles de temps pouvant avoir un caractère périodique.

Dans ce cas, les paramètres de temps peuvent se présenter sous la forme d'une durée périodique journalière et/ou hebdomadaire et/ou mensuelle et/ou annuelle.

Selon une autre caractéristique, les paramètres de temps peuvent correspondent à des réservations dans le temps ayant un caractère apériodique.

Dans ce cas les paramètres de temps comportent des informations correspondant à un temps absolu (instant) et une durée finie ou infinie.

La mise à jour des connexions possibles dans la base de données tient compte des paramètres de temps.

L'invention concerne également une unité de gestion de réseau de télécommunications comprenant :
- des moyens pour recevoir des demandes de connexion, lesdites connexions étant déterminées par des paramètres,
- des moyens pour vérifier si lesdites connexions sont possibles selon lesdits paramètres à l'aide d'une base de données dans laquelle toutes les connexions sont mémorisées,
- des moyens pour mettre à jour la base de données en conséquence, principalement caractérisé en ce qu'elle comprend des moyens de réservation des connexions tenant compte de paramètres de temps.

Selon une autre caractéristique l'unité comprend des moyens de mise à jour des connexions dans le réseau en cohérence avec le contenu de la base de données, laquelle comprend des réservations tenant compte des paramètres de temps.

D'autres particularités et avantages de l'invention apparaîtront clairement à la lecture de la description qui est faite ci après et en regard des dessins sur lesquels :
- la figure 1 illustre de façon schématique le système de gestion actuel avec les trois couches logiques de gestion du réseau, sur lequel on a représenté la localisation de l'implémentation de l'invention,
- la figure 2 illustre une architecture logicielle permettant de mettre en oeuvre le procédé conforme à l'invention.

Comme cela a été décrit et illustré par la figure 1, le système de gestion proposé comporte une couche logicielle dédiée à la gestion de paramètres de temps.

Ces paramètres de temps peuvent se présenter sous forme d'une suite d'intervalles de temps relatifs répétés quotidiennement et ou hebdomadairement et ou mensuellement et ou annuellement pour la gestion des services. Cette couche est implémentée dans la couche de gestion des services (SML).

Le procédé selon l'invention est mis en oeuvre par l'architecture logicielle représentée sur la figure 2.

Cette architecture comporte un gestionnaire d'agendas GA de la disponibilité et de l'utilisation des capacités offertes par les ressources de télécommunications ; capacités en bande passante d'un point de terminaison et ou capacité en nombre maximum de chemin de connexion et en identifiant de chemins de connexion pouvant être alloués.

L'architecture se présente sous la forme d'un serveur disposant d'un programme de gestion d'agenda PGA et d'une base de données de réservation BR. Les propriétés à gérer par ce programme sont typiquement les capacités en bande passante, les capacités en nombre maximum de chemin de connexion, et les capacités en identifiant des chemins de connexion pouvant être alloués des points de terminaison des éléments de réseau.

Ce gestionnaire d'agendas GA communique avec une base de donnée IT de la couche NML qui lui fournit des informations topologiques sur l'élément de réseau concerné à savoir les points de terminaison en entrée et en sortie de cet élément ainsi que leurs caractéristiques.

Des programmes clients du serveur de gestion d'agenda GA communiquent avec ce serveur.

Dans le cas du programme client gestionnaire de routage GR, ce dernier peut en interrogeant le serveur effectuer des vérifications sur la disponibilité des ressources pour les chemins qu'il souhaite établir et des réservations des chemins de connexion.

Dans le cas du programme client interface graphique utilisateur GUI, ce dernier peut en interrogeant le serveur connaître les plannings de réservation d'une capacité d'une ressource.

Ainsi l'invention permet de gérer la disponibilité et l'utilisation des ressources en tenant compte de paramètres temps (introduction de contraintes temps). Cette gestion permet ainsi d'interroger et ou de modifier les agendas de la disponibilité et de l'utilisation des ressources des éléments de réseau.

Les services apportés par cette gestion sont les suivants :
- la vérification des possibilités de réservation d'une ressource à partir des contraintes de temps et ou de contraintes techniques telles qu' bande passante, un identifiant de chemin de connexion pouvant être alloué;
- la réservation des ressources à partir des contraintes de temps et ou de contraintes techniques telle qu'une bande passante et un identifiant de chemin de connexion pouvant être alloué);
- l'absence de réservation dans l'impossibilité ;
- l'obtention pour une ressource, de la disponibilité en bande passante et ou en identifiant de chemins de connexion à partir d'une contrainte de temps;
- l'obtention pour une ressource de plages ou de périodes de temps disponibles à partir d'une contrainte technique telle qu'une bande passante et ou un identifiant de connexion pouvant être alloué.

En outre l'unité de gestion peut fournir les services suivants :
- la réservation de ressources multiples,
- la réservation et la vérification simultanée d'un ensemble de ressources,
- la fourniture de la meilleure ressource possible parmi un ensemble de ressources.

En outre l'unité est apte à gérer différents types de paramètres de temps:
- permanents (une durée infinie débutant à instant donné)
- apériodiques (une durée finie débutant à un instant donné) ;
- périodiques hebdomadaires (suite d'intervalles de temps relatifs qui se reproduit toutes les semaines);
- périodiques quotidiens (suite d'intervalle de temps relatifs qui se reproduit tous les jours);

On va dans la suite détailler le mécanisme de vérification de la disponibilité et de l'utilisation des ressources à partir de la contrainte de temps selon l'invention :
A1) On considère par conséquent le planning d'utilisation d'une ressource :
   Chaque propriété d'une ressource (par exemple capacité en bande passante entrante d'un point de terminaison) possède son planning d'utilisation comme cela vient d'être décrit.
   Ce planning contient « une liste de suites de transitions ». Une transition est un objet possédant une valeur de temps absolu, un signe montant/descendant, une valeur d'amplitude.
A2) description détaillée de la « suite de transitions » :
   Quel que soit son type (apériodique, périodique), un objet «suite de transitions» est composé d'un nombre fini « d'intervalles de temps » qui eux-mêmes sont décomposés en deux transitions de même amplitude (une montante et une descendante).
   Chaque transition en plus de sa valeur de temps (AA/MM/JJ/HH/MM/SS) et son signe (montant ou descendant) porte une valeur définissant son amplitude (par exemple 10 cellules par seconde dans le cas du réseau ATM (Asynchronous Transfer Mode)).
A3) le principe du mécanisme de vérification est le suivant :
   La première étape consiste pour chaque propriété de la ressource testée à mélanger les transitions issues du planning courant d'utilisation avec celles de la liste des transitions découlant de la contrainte de temps qui est un des paramètres d'entrée de l'opération « vérification de la disponibilité des ressources ».
   Ensuite, à partir de cette liste et dans le sens montant du temps (depuis la plus ancienne transition), on procède de la manière suivante sur chaque transition :
   - étape 2.1 : ajouter ou retrancher l'amplitude (selon le signe de la transition) à la valeur courante.
   - étape 2.2 : vérifier que la capacité n'est pas atteinte (uniquement pour les transitions montantes).
   - étape 2.3 : si la capacité est atteinte, la transition correspondante est mémorisée afin de fournir un maximum d'éléments sur les transitions et les intervalles de temps « en erreur », c'est-à-dire ceux durant lesquels la capacité de la ressource est dépassée.
   - étape 2.4 : passer à la transition suivante avec la nouvelle valeur courante.

   Il est possible d'optimiser le traitement en procédant de la manière suivante :
B.1) Optimisation pour ne tester que les transitions nécessaires.
   Avant de passer à la seconde étape (mélange des transitions d'entrée et transitions correspondant à l'occupation courante), les « intervalles de temps » du planning d'utilisation qui n'ont pas d'impact sur l'opération de vérification de la disponibilité de la ressource ne sont pas pris en compte à savoir:
   - ceux se terminant avant le début du sous ensemble d'entrée.
   - ceux commençant après la fin du sous ensemble d'entrée.
B.2) différents types de propriétés (capacité en bande passante, capacité en nombre maximum de chemin de connexion et capacité en identifiant de chemin de connexion pouvant être alloués)
   Les étapes 2.1 et 2.2 (test de la capacité) diffèrent selon le type de la capacité de la manière suivante :
   Pour une capacité dite « de type 1 » (par exemple bande passante maximum, ou nombre maximum de chemin de connexion), il suffit de gérer une variable simple (par exemple un nombre entier) qui sera incrémentée à chaque transition selon l'amplitude de la transition pour être testée par la suite.
   Pour une capacité dite « de type 2 » (par exemple table d'identifiant de chemin de connexion pouvant être alloués c'est à dire ensemble fini de valeurs possibles d'identifiants, il est nécessaire de maintenir à jour une table permettant de connaître les valeurs libres et réciproquement celles qui ne le sont pas. Ainsi, à chaque transition montante, il est nécessaire de vérifier dans cette table si la valeur portée par cette transition est déjà utilisée ou non. Si « la place était libre » elle est immédiatement occupée pour n'être libérée que sur la transition descendante correspondante.

## Revendications

1. Procédé de gestion d'un réseau de télécommunications comprenant :
- la réception de demandes de connexion, lesdites connexions étant déterminées à partir de paramètres contenus dans lesdites demandes,
- la vérification de la possibilité de connexion selon lesdits paramètres, à partir d'une base de données dans laquelle toutes les connexions sont mémorisées,
- la mise à jour de ladite base de données lorsque la connexion est possible,
**caractérisé en ce que** lesdits paramètres comprennent des paramètres de temps.

2. Procédé de gestion de réseau selon la revendication 1, **caractérisé en ce que** les paramètres de temps correspondent à des suites d'intervalles de temps ayant un caractère périodique.

3. Procédé de gestion de réseau selon la revendication 1, **caractérisé en ce que** les paramètres de temps correspondent à des suites d'intervalles de temps ayant un caractère apériodique.

4. Procédé de gestion de réseau selon la revendication 3, **caractérisé en ce que** les paramètres de temps comportent une donnée correspondant à un temps absolu et une durée finie ou infinie.

5. Procédé de gestion de réseau selon l'une quelconque des revendications précédentes, **caractérisé en ce que** la mise à jour des connexions possibles dans la base de données tient compte des paramètres de temps.

6. Unité de gestion de réseau de télécommunications comprenant :
- des moyens (GA) pour recevoir des demandes de connexion, lesdites connexions étant déterminées par des paramètres contenus dans lesdites demandes,
- des moyens (GA) pour déterminer si lesdites connexions sont possibles selon lesdits paramètres à l'aide d'une base de données dans laquelle toutes les connexions sont mémorisées,
- des moyens (GA) pour mettre à jour la base de données en conséquence,
**caractérisé en ce qu'**elle comprend des moyens (PGA, BR) de réservation des connexions tenant compte de paramètres de temps.

7. Unité de gestion d'un réseau selon la revendication 6, **caractérisé en ce qu'**elle comprend des moyens de mise à jour des connexions dans le réseau selon le contenu de la base de données, laquelle comprend des réservations tenant compte de paramètres de temps.

## Claims

1. A method of managing a telecommunication network, the method including:
- receiving connection requests, said connections being determined on the basis of parameters contained in said requests,
- verifying the possibility of connection in accordance with said parameters using a database in which all connections are stored, and
- updating said database if the connection is possible,
which method is **characterized in that** said parameters include time parameters.

2. A network management method according to claim 1, **characterized in that** the time parameters correspond to series of time intervals having a periodic character.

3. A network management method according to claim 1, **characterized in that** the time parameters correspond to series of time intervals having an aperiodic character.

4. A network management method according to claim 3, **characterized in that** the time parameters include a data item corresponding to an absolute time and a finite or infinite duration.

5. A network management method according to any preceding claim, **characterized in that** the updating of the possible connections in the database takes account of the time parameters.

6. A telecommunication network management unit including:
- means (GA) for receiving connection requests, said connections being determined by parameters contained in said requests,
- means (GA) for determining if said connections are possible in accordance with said parameters using a database in which all connections are stored, and
- means (GA) for updating the database accordingly,
which unit is **characterized in that** it includes means (PGA, BR) for reserving connections taking account of time parameters.

7. A network management unit according to claim 6, **characterized in that** it includes means for updating connections in the network in accordance with the content of the database, which contains reservations taking account of time parameters.

## Patentansprüche

1. Verfahren zum Steuern eines Telekommunikationsnetzes, das umfasst:
- Empfangen von Verbindungsanforderungen, wobei die Verbindungen anhand von in den Anforderungen enthaltenen Parametern bestimmt sind,
- Verifizieren der Möglichkeit der den Parametern entsprechenden Verbindung anhand einer Datenbank, in der sämtliche Verbindungen gespeichert sind,
- Aktualisieren der Datenbank, wenn die Verbindung möglich ist,
**dadurch gekennzeichnet, dass** die Parameter Zeitparameter enthalten.

2. Verfahren zum Steuern eines Netzes nach Anspruch 1, **dadurch gekennzeichnet, dass** die Zeitparameter Folgen von Zeitintervallen entsprechen, die einen periodischen Charakter haben.

3. Verfahren zur Steuerung eines Netzes nach Anspruch 1, **dadurch gekennzeichnet, dass** die Zeitparameter Folgen von Zeitintervallen entsprechen, die einen nicht periodischen Charakter haben.

4. Verfahren zur Steuerung eines Netzes nach Anspruch 3, **dadurch gekennzeichnet, dass** die Zeitparameter Daten enthalten, die einer absoluten Zeit und einer endlichen oder unendlichen Zeitspanne entsprechen.

5. Verfahren zur Steuerung eines Netzes nach einem der vorhergehenden Ansprüche,
**dadurch gekennzeichnet**, die Aktualisierung der möglichen Verbindungen in der Datenbank die Zeitparameter berücksichtigt.

6. Einheit zur Steuerung eines Telekommunikationsnetzes, die umfasst:
- Mittel (GA), die Verbindungsanforderungen empfangen, wobei die Verbindungen durch in den Anforderungen enthaltene Parameter bestimmt sind,
- Mittel (GA), die mit Hilfe einer Datenbank, in der alle diese Verbindungen gespeichert sind, feststellen, ob die diesen Parametern entsprechenden Verbindungen möglich sind,
- Mittel (GA), die die Datenbank entsprechend aktualisieren,
**dadurch gekennzeichnet, dass** sie Mittel (PGA, BR) umfasst, die Verbindungen unter Berücksichtigung von Zeitparametern reservieren.

7. Einheit zur Steuerung eines Netzes nach Anspruch 6, **dadurch gekennzeichnet, dass** sie Mittel zum Aktualisieren der Verbindungen in dem Netz entsprechend dem Inhalt der Datenbank, die Zeitparameter berücksichtigende Reservierungen enthält, umfasst.
